# EUROPÄISCHE PATENTSCHRIFT

(11) **EP 2 612 032 B1**
(45) Veröffentlichungstag und Bekanntmachung des Hinweises auf die Patenterteilung: **12.09.2018**
(21) Anmeldenummer: 11730289.3
(22) Anmeldetag: 06.07.2011
(51) Int. Cl.: F04B 11/00, F04B 49/22

(54) **ANORDNUNG ZUR DROSSELUNG EINER FLUIDSTRÖMUNG UND KORRESPONDIERENDE KOLBENPUMPE ZUR FÖRDERUNG VON FLUIDEN**
ARRANGEMENT FOR THROTTLING A FLUID FLOW, AND CORRESPONDING PISTON PUMP FOR DELIVERING FLUIDS
SYSTÈME POUR RÉDUIRE UN ÉCOULEMENT DE FLUIDE ET POMPE À PISTON CORRESPONDANTE POUR REFOULER DES FLUIDES

(30) Priorität: 02.09.2010 DE 102010040167
(43) Veröffentlichungstag der Anmeldung: 10.07.2013
(73) Patentinhaber: Robert Bosch GmbH, 70442 Stuttgart (DE)
(72) Erfinder: FELLMETH, Reiner, 74354 Besigheim (DE); HAECKER, Juergen, 71701 Schwieberdingen (DE); GAERTNER, Oliver, 74232 Abstatt (DE); JAHN, Heiko, 71732 Tamm (DE); ZIMMERMANN, Marc, 87527 Sonthofen (DE); SCHULLER, Wolfgang, 74389 Cleebronn (DE); HERMANN, Harald, 71292 Friolzheim (DE); STOTZ, Rolf, 71665 Vaihingen (DE); GOSSE, Daniel, 10115 Berlin (DE)
(86) Internationale Anmeldenummer: PCT/EP2011/061391
(87) Internationale Veröffentlichungsnummer: WO 2012/028362

(56) Entgegenhaltungen:
- EP-A2- 0 881 387
- WO-A1-03/004872
- DE-A1- 2 423 438

## Beschreibung

### Stand der Technik

Die Erfindung geht aus von einer Anordnung zur Drosselung einer Fluidströmung nach der Gattung des unabhängigen Patentanspruchs 1. Zudem betrifft die vorliegende Erfindung eine Kolbenpumpe zur Förderung von Fluiden mit einer solchen Drosselvorrichtung.

Kolbenpumpen sind aus dem Stand der Technik in unterschiedlichen Ausführungsformen bekannt. Beispielsweise werden in Fahrzeugbremsanlagen häufig Radialkolbenpumpen mit mehreren Pumpelementen zur Förderung von Druckmitteln verwendet, bei welchen wenigstens ein Kolben mittels eines Exzenters hin und her bewegt werden kann. Typischerweise bestehen diese sogenannten Pumpenelemente aus einem Kolben, einer häufig als Zylinder ausgebildeten Kolbenlauffläche, Einlass- und Auslassventilen sowie Dichtelementen. Die Ventile dienen der Fluidsteuerung bei der Pumpbewegung des Kolbens. Hierbei dient das Einlassventil dazu, das Fluid während der Verdichtungsphase nicht in den Ansaugraum zurückströmen zu lassen. Das Auslassventil verhindert die Rückströmung des Fluids von der Druckseite in den Pumpeninnenraum und ist typischerweise im Deckel der Pumpe untergebracht. Zur Geräusch- und Pulsationsoptimierung ist zum Drosseln der Fluidströmung nach dem Auslassventil mindestens eine Drosselanordnung vorgesehen.

In der Offenlegungsschrift DE 10 2008 002 740 A1 wird beispielsweise eine Kolbenpumpe zur Bremsdruckregelung in einer hydraulischen Fahrzeugbremsanlage beschrieben. Die beschriebene Kolbenpumpe umfasst ein Pumpengehäuse, eine im Pumpengehäuse angeordnete Aufnahmebohrung für die Kolbenpumpe und einen die Aufnahmepumpe nach außen verschließenden Ventildeckel, in welchem ein Auslassventil und erste und zweite Kanalabschnitte eines Abströmkanals untergebracht sind. Die Abströmgeometrie beeinflusst das Geräuschverhalten der Kolbenpumpe und wird deswegen meist mit einer geeigneten Verjüngung des Abströmkanals ausgeführt, welche dann eine Drosselwirkung darstellt.

In der Offenlegungsschrift DE 10 2006 027 555 A1 wird beispielsweise eine Kolbenpumpe mit reduzierter Geräuschentwicklung beschrieben. Die beschriebene Kolbenpumpe zur Förderung von Fluiden umfasst einen Kolben, ein Zylinderelement und einen zwischen einem Einlassventil und einem Auslassventil angeordneten Druckraum, welcher von einem Deckel abgeschlossen ist, wobei das Auslassventil einen als Kugel ausgeführten Schließkörper, eine auf den Schließkörper wirkende als Spiralfeder ausgeführte Vorspanneinrichtung, ein Basiselement zum Abstützen der Vorspanneinrichtung und ein Scheibenelement umfasst, und wobei ein Dichtsitz des Auslassventils am Scheibenelement angeordnet ist. Durch die Verwendung des Scheibenelements soll sichergestellt werden, dass Bauteiltoleranzen verschiedener Bauteile der Kolbenpumpe sich nicht negativ auf das Auslassventil auswirken können. Aus Dokument DE 24 23 438 A1 ist ein Drosselelement bekannt, welches einen federelastischen, scheibenförmigen Körper aufweist, welcher an seiner Innenseite gelagert ist und welcher an seiner Außenseite durch den Druck des Fluids verformt wird.

### Offenbarung der Erfindung

Die erfindungsgemäße Anordnung zur Drosselung einer Fluidströmung mit den Merkmalen des unabhängigen Patentanspruchs 1 hat demgegenüber den Vorteil, dass eine Reduktion von Pulsationen in einem Fluidsystem durch einen variablen Drosselquerschnitt mit einfachsten, kostengünstigen, prozesssicher montierbaren, werkzeugfallenden Bauteilen und robustem Design möglich ist, welches unempfindlicher gegenüber Bauteil- und Zusammenbautoleranzen ist, als bisher bekannte Drosselanordnungen mit einem variablen Querschnitt. Durch Ausführungsformen der vorliegenden Erfindung werden Bauteiltoleranzen nicht in Toleranzen des Strömungsquerschnitts übersetzt, sondern durch eine Parallelverschiebung der Drosselkennlinie in vernachlässigbar kleine Differenzen des Öffnungsverhaltens der Drosselanordnung.

Kern der Erfindung ist ein Drosselelement mit einem federelastischen Grundkörper in Form einer Scheibe. Diese verfügt über eine erste Öffnung, welche durchströmt werden kann. Der Grundkörper kann verschiedene Querschnitte aufweisen und beispielsweise als Tellerfeder und/oder Blattfeder ausgebildet sein. Zudem können Kragen und/oder Bünde an dem scheibenförmigen Grundkörper angeordnet werden, so dass andere Formen, wie beispielsweise ein im Querschnitt hutförmiger und/oder kappenförmiger Grundkörper ausgebildet werden. Der Grundkörper ist vorzugsweise radialsymmetrisch, kann aber auch als eckige Scheibe ausgebildet sein. Das Drosselelement wird derart in den Fluidkanal eingebaut, dass es von beiden Seiten an einem Auflager aufliegt. Zwischen den beiden Auflagern besteht ein vorgegebener Abstand. Das Drosselelement kann zwischen den Auflagern im eingebauten Zustand definiert vorgespannt sein, wodurch sich ein definierter Öffnungsdruck ergibt. Liegt eine Druckdifferenz zwischen Ober- und Unterseite des Elements an und ist diese stark genug, um den definierten Öffnungsdruck der Vorspannung zu überwinden, so löst sich das Drosselelement vom Auflager der Seite mit dem höheren Druck ab und führt einen Hub aus, durch welchen ein Strömungsquerschnitt entsteht, über welchen ein Druckausgleich stattfindet.

Das Drosselelement liegt an den Auflagern vorzugsweise formschlüssig an, wodurch eine Dichtwirkung in Form einer Linien- oder Flächendichtung realisiert wird. Zudem besteht die Möglichkeit durch eine zweite Öffnung einen definierten, konstanten Strömungsquerschnitt im druckausgeglichenen Zustand freizugeben. Dies entspricht einer Parallelschaltung eines weiteren Drosselelements mit einem konstanten Querschnitt. Die zweite Öffnung kann beispielsweise durch eine Vertiefung in den Auflagen, einen Ringspalt und/oder eine Öffnung im Drosselelement in Form einer Bohrung, eines Schlitzes usw. realisiert werden. Hierbei gibt es des Weiteren die Möglichkeit eine gerichtete Zwangsabströmung vorzusehen.

Zur Steigerung der Lebensdauer des Drosselelements kann ein Anschlag vorgesehen werden, welcher den Öffnungshub begrenzt. Im Bereich dieses Anschlags kann eine fluidische Endlagendämpfung das Öffnungs- und Geräuschverhalten weiter optimieren.

Ausführungsformen der vorliegenden Erfindung stellen eine Anordnung zur Drosselung einer Fluidströmung mit einem variabel einstellbaren Öffnungsquerschnitt zur Verfügung, um ein progressives Öffnungsverhalten bzw. eine degressive Zunahme des Durchflusswiderstands mit zunehmendem Durchfluss in einem Fluidkanal zu implementieren. Dies ermöglicht ein starkes Androsseln bei niedrigen Durchflüssen, sowie einen geringen Durchflusswiderstand bei größeren Durchflüssen, was in vorteilhafter Weise einen guten Wirkungsgrad zur Folge hat. Die Erfindung beschreibt mögliche Designs des Drosselelements, welche durch einfache, werkzeugfallende und prozesssicher herstell- und montierbare Bauteile realisierbar sind.

Ausführungsformen der erfindungsgemäßen Anordnung zur Drosselung einer Fluidströmung können in vorteilhafter Weise in Parallel- und/oder Reihenschaltung zu einer Fluidpumpe, einem Fluidventil oder einem sonstigen Fluidelement angeordnet werden, welches Pulsationen, d.h. Änderungen des Volumenstroms über der Zeit im Fluidsystem verursacht. Vorzugsweise werden Ausführungsformen der erfindungsgemäßen Anordnung zur Drosselung einer Fluidströmung in Aggregaten zur hydraulischen Bremsmodulation, wie z.B. ABS (Antiblockiersystem), ESP (Elektronisches Stabilitätsprogramm), einem elektrohydraulischen Bremssystem und ähnlichen Geräten in Fahrzeugbremssystemen zur Reduktion von hydraulischen Pulsationen verwendet, welche sich auf andere Komponenten bis hin in den Fahrzeuginnenraum übertragen können, oder im schlimmsten Fall "Ruckeln", d.h. Änderungen der Längsbeschleunigung, und "Nicken" des Fahrzeugs verursachen.

Eine erfindungsgemäße Anordnung zur Drosselung einer Fluidströmung umfasst ein Drosselelement, welches zur Beeinflussung eines Strömungsquerschnitts in einem Fluidkanal angeordnet ist. Erfindungsgemäß weist das Drosselelement einen federelastischen scheibenförmigen Grundkörper auf, welcher mit seiner Oberseite und Unterseite so zwischen mindestens zwei Auflagern im Fluidkanal angeordnet ist, dass der Strömungsquerschnitt in Abhängigkeit von der Druckdifferenz zwischen Oberseite und Unterseite des federelastischen scheibenförmigen Grundkörpers variabel einstellbar ist, wobei mindestens ein Auflager an der Oberseite des federelastischen scheibenförmigen Grundkörpers und mindestens ein Auflager an der Unterseite des federelastischen scheibenförmigen Grundkörpers anliegt.

Eine erfindungsgemäße Kolbenpumpe zur Förderung von Fluiden umfasst einen Kolben, ein Zylinderelement und einen zwischen einem Einlassventil und einem Auslassventil angeordneten Druckraum, welcher von einem Deckel abgeschlossen ist, wobei in der Fluidströmung nach dem Auslassventil eine erfindungsgemäße Anordnung zur Drosselung einer Fluidströmung vorgesehen ist.

Durch die in den abhängigen Ansprüchen aufgeführten Maßnahmen und Weiterbildungen sind vorteilhafte Verbesserungen der im unabhängigen Patentanspruch 1 angegebenen Anordnung zur Drosselung einer Fluidströmung möglich.

Besonders vorteilhaft ist, dass der federelastische scheibenförmige Grundkörper eine durchströmbare erste Öffnung aufweist, wobei bei einer abgehobenen Seite des federelastischen scheibenförmigen Grundkörpers entweder die erste Öffnung des federelastischen scheibenförmigen Grundkörpers durchströmt oder der federelastische scheibenförmige Grundkörper umströmt ist.

In vorteilhafter Ausgestaltung der erfindungsgemäßen Anordnung ist eine unabhängig vom Differenzdruck freigegebene zweite Öffnung mit einem definierten konstanten Strömungsquerschnitt vorhanden. Die zweite Öffnung kann beispielsweise in den federelastischen scheibenförmigen Grundkörper und/oder als Vertiefung in die mindestens zwei Auflager eingebracht und/oder als Ringspalt ausgeführt werden.

In weiter vorteilhafter Ausgestaltung der erfindungsgemäßen Anordnung ist der federelastische scheibenförmige Grundkörper unter einer definierten Vorspannung zwischen den mindestens zwei Auflagern angeordnet, so dass ein Öffnungsdifferenzdruck vorgegeben ist, wobei die mindesten zwei Auflager mit einem vorgebbaren Abstand zueinander angeordnet sind. Die Druckdifferenz hebt den federelastischen scheibenförmigen Grundkörper von dem mindestens einen Auflager der Seite mit dem höheren Druck ab, so dass der federelastische scheibenförmige Grundkörper einen Hub ausführt und den Strömungsquerschnitt vergrößert.

In weiter vorteilhafter Ausgestaltung der erfindungsgemäßen Anordnung liegt der federelastische scheibenförmige Grundkörper unter Ausbildung einer Flächendichtung und/oder Liniendichtung formschlüssig an den mindestens zwei Auflagern an.

Das Drosselverhalten des Drosselelements kann beispielsweise durch Verändern des konstanten Querschnitts der zweiten Öffnung und/oder der Steifigkeit und/oder Federkennlinie und/oder Kraft-Weg-Kennlinie des federelastischen scheibenförmigen Grundkörpers und/oder des Ansprechdrucks und/oder der Vorspannung und/oder durch Verändern einer Hubbegrenzung verändert werden.

In weiter vorteilhafter Ausgestaltung der erfindungsgemäßen Anordnung können ein Element mit einem in Abhängigkeit vom Druck veränderbaren Volumen und/oder eine Drosselvorrichtung mit konstantem Querschnitt und/oder ein Rückschlagventil vorgesehen werden, welche strömungstechnisch in Reihen- und/oder Parallelschaltung zum Drosselelement angeordnet sind. Ein in Durchflussrichtung vor das Drosselelement geschaltetes veränderbares Volumen kann beispielsweise als druckabhängiges elastisches Volumen in Form eines kompressiblen Gasvolumens ausgeführt werden. Ein solches elastisches Volumen kann über einen größeren Druckbereich zur Dämpfung der Pulsationen im Fluidkanal verwendet werden. Im Umkehrschluss kann dadurch das kompressible Volumen des Dämpfungselements bei gleichem zu bedämpfenden Druckbereich reduziert werden. Das Drosselelement kann in Durchflussrichtung hinter eine Volumenstromquelle und ein elastisches Volumen geschaltet werden. Die Volumenstromquelle kann beispielsweise eine Hubkolbenpumpe, eine Zahnradpumpe, oder auch ein sonstiges Element sein, welches eine zeitliche Änderung des Volumenstroms bewirkt. Das elastische Volumen speichert temporär das durch die Drucküberhöhung am Drosselelement verfügbare Volumen entsprechend seiner Druck-Volumen-Kennlinie. Das elastische Volumen kann beispielsweise durch die Eigenelastizität des Fluidsystems, einen Kolbenspeicher mit Rückstellfeder, einen Gasdruckspeicher, einen Faltenbalg, eine Membranfeder oder ähnliche Komponenten realisiert werden, welche unter Einwirken von Druck ihre Volumenaufnahme erhöhen. Durch den variablen Drosselquerschnitt der erfindungsgemäßen Anordnung zur Drosselung einer Fluidströmung können im Bereich kleiner Volumenströme eine stärkere Drucküberhöhung erzeugt und die Volumenaufnahme des elastischen Volumens erhöht werden. Dadurch ergibt sich eine geringere Restwelligkeit/Amplitudenspektrum am Ausgang des Fluidsystems. Im Bereich großer Volumenströme werden die Verluste an der Drossel durch deren progressiven Kennlinienverlauf minimiert.

In weiter vorteilhafter Ausgestaltung der erfindungsgemäßen Anordnung ist der federelastische scheibenförmige Grundkörper als Rückstellfeder für ein Schließelement eines Ventils ausgeführt. Dadurch lässt sich in vorteilhafter Weise ein bauraumoptimiertes Multifunktionselement realisieren.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 bis 6 zeigen jeweils eine schematische Schnittdarstellung eines Ausführungsbeispiels einer erfindungsgemäßen Anordnung zur Drosselung einer Fluidströmung.
Fig. 7 bis 14 zeigen jeweils eine schematische Schnittdarstellung eines Ausführungsbeispiels eines möglichen Dichtkonzepts an Auflagern der erfindungsgemäßen Anordnungen zur Drosselung einer Fluidströmung aus Fig. 1 bis 6.
Fig. 15 zeigt ein Kennliniendiagramm mit mehreren Kennlinien von verschiedenen Anordnungen zur Drosselung einer Fluidströmung zur Darstellung des dynamischen Strömungsverhaltens von Ausführungsformen der erfindungsgemäßen Anordnung zur Drosselung einer Fluidströmung im Vergleich mit anderen Anordnungen zur Drosselung einer Fluidströmung.
Fig. 16 bis 18 zeigen jeweils ein schematisches Ersatzschaltbild eines Ausführungsbeispiels der erfindungsgemäßen Anordnung zur Drosselung einer Fluidströmung.
Fig. 19 zeigt verschiedene Volumenstrom-Zeit-Kennlinien einer Fluidpumpe bzw. Pulsationsquelle mit einem über der Zeit nicht konstanten Volumenstrom.
Fig. 20 zeigt verschiedene Volumenänderungs-Druck-Kennlinien eines Elements mit variablen Volumen.
Fig. 21 zeigt einen Querschnitt durch einen hinteren Bereich einer erfindungsgemäßen Kolbenpumpe zur Förderung von Fluiden mit einer erfindungsgemäßen Anordnung zur Drosselung einer Fluidströmung.
Fig. 22 zeigt eine schematische Draufsicht auf ein Ausführungsbeispiel eines Drosselelements für die erfindungsgemäße Anordnung zur Drosselung einer Fluidströmung aus Fig. 21.

### Ausführungsformen der Erfindung

Aus dem Stand der Technik sind Drosselanordnungen in Fluidkanälen mit konstantem Querschnitt bekannt. Variable Querschnitte werden durch druckdifferenzbetätigte oder fremdkraftbetätigte Ventile realisiert, welche relativ aufwändig und teuer sind. Die bekannten Drosselvorrichtungen weisen eine annähernd lineare Drosselkennlinie auf, also einen linear steigenden Durchflusswiderstand bei zunehmendem Volumenstrom durch den Drosselquerschnitt. Rückschlagventile ermöglichen hierbei ein Verschieben des X-Achsenabschnitts durch Festlegen eines Öffnungsdrucks. Elektronisch geregelte Drosselventile sind aufgrund einer erforderlichen Detektion einer Ventilstösselposition sehr aufwändig zu realisieren.

Variable Drosselanordnungen mit einem definierten Strömungsquerschnitt im druckausgeglichenen Zustand und definiertem Öffnungsverhalten sind im Fahrzeugbereich aufgrund der hohen Anforderungen an den Funktionsbereich bezüglich Temperaturbereich, Dauerhaltbarkeit usw. in der Regel nicht kostengünstig darstellbar. Bauteiltoleranzen und Zusammenbautoleranzen führen dazu, dass Drosselanordnungen mit variablem Querschnitt und deren benachbarte Teile nur sehr kostenintensiv prozesssicher hergestellt werden können.

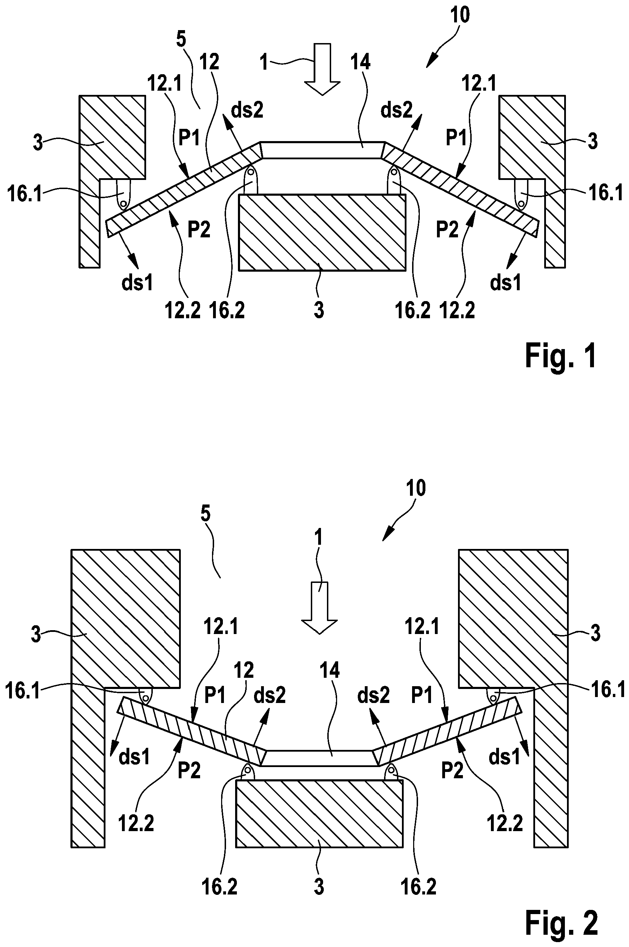

Wie Fig. 1 bis 6 ersichtlich ist, umfasst eine Anordnung zur Drosselung einer Fluidströmung 1 ein Drosselelement 10, welches zur Beeinflussung eines Strömungsquerschnitts in einem Fluidkanal 5 angeordnet ist. Erfindungsgemäß weist das Drosselelement 10 einen federelastischen scheibenförmigen Grundkörper 12, 22, 32, 42 auf, welcher mit seiner Oberseite 12.1 und Unterseite 12.2 so zwischen mindestens zwei Auflagern 16.1, 16.2 im Fluidkanal 1 angeordnet ist, dass der Strömungsquerschnitt in Abhängigkeit von der Druckdifferenz zwischen der Oberseite 12.1 und der Unterseite 12.2 des federelastischen scheibenförmigen Grundkörpers 12, 22, 32, 42 variabel einstellbar ist. Hierbei liegt mindestens ein Auflager 16.1, 16.2 an der Oberseite 12.1 des federelastischen scheibenförmigen Grundkörpers 12, 22, 32, 42 und mindestens ein Auflager 16.1, 16.2 an der Unterseite 12.2 des federelastischen scheibenförmigen Grundkörpers 12, 22, 32, 42 an. In den dargestellten Ausführungsbeispielen ist jeweils die Seite des scheibenförmigen Grundkörpers 12, 22, 32, 42 als Oberseite 12.1 bezeichnet, welche in der jeweiligen Darstellung oben angeordnet und einem ersten Druck P1 ausgesetzt ist, während jeweils die Seite des scheibenförmigen Grundkörpers 12, 22, 32, 42 als Unterseite 12.1 bezeichnet ist, welche in der jeweiligen Darstellung unter angeordnet und einem zweiten Druck P1 ausgesetzt ist. Der Fluidkanal 5 ist durch Kanalwände 3 begrenzt, an welchen auch die Auflager 16.1, 16.2 für das Drosselelement 10 entsprechend angeordnet sind. Zudem ist in den dargestellten Ausführungsbeispielen die Fließrichtung der Fluidströmung 1 von oben nach unten, wobei oberhalb des Drosselelements 10 ein erster Druck P1 und unterhalb des Drosselelements 10 ein zweiter Druck P2 herrscht, so dass am Drosselelement 10 ein Differenzdruck Δp = P1 - P2 anliegt.

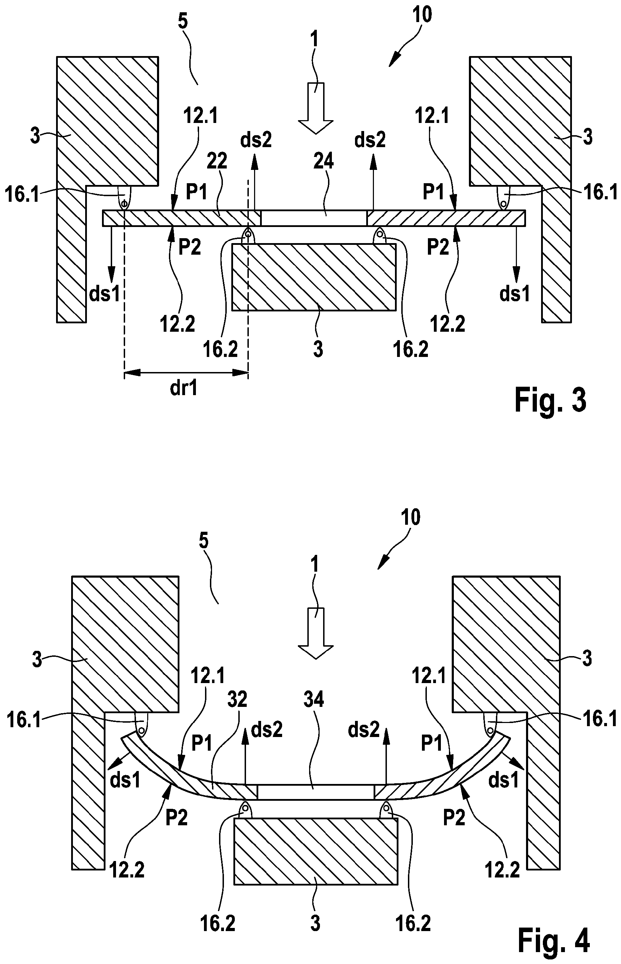

Wie aus Fig. 1 bis 6 weiter ersichtlich ist, weisen die dargestellten Ausführungsbeispiele des Drosselelements 10 in dem federelastischen scheibenförmigen Grundkörper 12, 22, 32, 42 jeweils eine durchströmbare erste Öffnung 14, 24, 34, 44 auf, wobei die Querschnitte der verschiedenen Ausführungsbeispiele verschiedene Formen aufweisen können. Dadurch wird bei einer abgehobenen Oberseite 12.1 des federelastischen scheibenförmigen Grundkörpers 12, 22, 32, 42 der federelastische scheibenförmige Grundkörper 12, 22, 32, 42 umströmt, während bei einer abgehobenen Unterseite 12.2 des federelastischen scheibenförmigen Grundkörpers 12, 22, 32, 42 die erste Öffnung 14, 24, 34, 44 des federelastischen scheibenförmigen Grundkörpers 12, 22, 32, 42 durchströmt wird. Der federelastische scheibenförmige Grundkörper 12, 22, 32, 42 ist bei den dargestellten Ausführungsbeispiel unter einer definierten Vorspannung zwischen den mindestens zwei Auflagern 16.1, 16.2 angeordnet, so dass ein Öffnungsdifferenzdruck vorgegeben ist. Die mindesten zwei Auflager 16.1, 16.2 sind mit einem vorgebbaren Abstand dr1 zueinander angeordnet, wobei der vorgegebene Abstand dr1 die Hebelverhältnisse des Drosselelements 10 vorgibt. Der Abstand dr1 zwischen einem ersten Auflager 16.1, und einem zweiten Auflager 16.2 ist stellvertretend für alle Ausführungsbeispiel in Fig. 3 eingezeichnet. Die Druckdifferenz am Drosselelement 10 hebt den federelastischen scheibenförmigen Grundkörper 12, 22, 32, 42 bei Erreichen des vorgegebenen Öffnungsdifferenzdrucks von dem mindestens einen Auflager 16.1, 16.2 der Seite 12.1, 12.2 mit dem höheren Druck P1, P2 ab, so dass der federelastische scheibenförmige Grundkörper 12, 22, 32, 42 einen Hub ds1 oder einen Hub ds2 ausführt und den Strömungsquerschnitt vergrößert.

Bei den in Fig. 1 und 2 dargestellten Ausführungsbeispielen ist der elastische Grundkörper 12 des Drosselelements 10 als Tellerfeder mit einer ersten Öffnung 14 ausgeführt. Wie aus Fig. 1 weiter ersichtlich ist, liegt bei dem dargestellten Ausführungsbeispiel eine Außenseite des als Tellerfeder ausgeführten Grundkörpers 12 als Oberseite 12.1 an einem umlaufenden ersten Auflager 16.1 an, wobei eine Innenseite des als Tellerfeder ausgeführten Grundkörpers 12 als Unterseite an einem zweiten Auflager 16.2 anliegt. Im Unterschied zu Fig. 1 liegt bei dem in Fig. 2 dargestellten Ausführungsbeispiel die Innenseite des als Tellerfeder ausgeführten Grundkörpers 12 als Oberseite 12.1 an dem umlaufenden ersten Auflager 16.1 an, wobei eine Außenseite des als Tellerfeder ausgeführten Grundkörpers 12 als Unterseite 12.2 an dem zweiten Auflager 16.2 anliegt. Durch den unterschiedlichen Einbau des als Tellerfeder 12 ausgeführten Grundkörpers lassen sich mit dem gleichen Drosselelement 10 verschiedene dynamische Drosselverhalten erzielen.

Bei dem in Fig. 3 dargestellten Ausführungsbeispiel ist der elastische Grundkörper 22 des Drosselelements 10 als Flachscheibe mit einer ersten Öffnung 24 ausgeführt. Ein Drosselelement 10 mit einem als Flachscheibe ausgeführten Grundkörper 22 zeigt im Unterschied zu dem als Tellerfeder ausgeführten Grundkörper 12 unabhängig von der Einbaulage das gleiche dynamische Drosselverhalten.

Bei dem in Fig. 4 dargestellten Ausführungsbeispiel ist der elastische Grundkörper 32 des Drosselelements 10 als kappenförmige Scheibe mit einer ersten Öffnung 34 ausgeführt. Analog zum Drosselelement 10 mit dem als Tellerfeder ausgeführten Grundkörper 12 zeigt auch das Drosselelement 10 mit dem als kappenförmige Scheibe ausgeführten Grundkörper 32 verschiedene dynamische Drosselverhalten in Abhängigkeit von der Einbaulage.

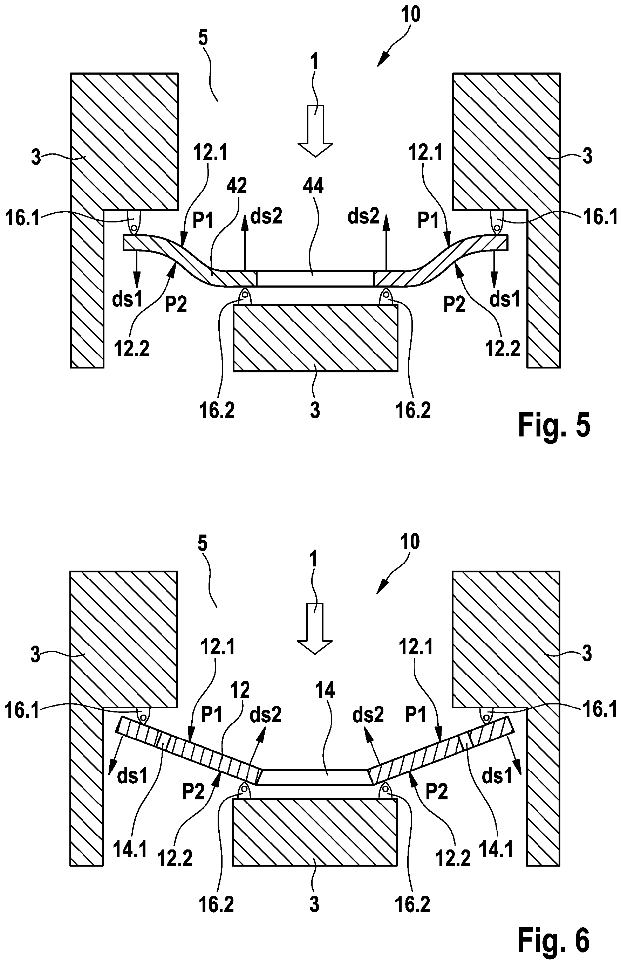

Bei dem in Fig. 5 dargestellten Ausführungsbeispiel ist der elastische Grundkörper 42 des Drosselelements 10 als hutförmige Scheibe mit einer ersten Öffnung 44 ausgeführt. Analog zum Drosselelement 10 mit dem als Tellerfeder ausgeführten Grundkörper 12 zeigt auch das Drosselelement 10 mit dem als hutförmige Scheibe ausgeführten Grundkörper 42 verschiedene dynamische Drosselverhalten in Abhängigkeit von der Einbaulage.

Bei dem in Fig. 6 dargestellten Ausführungsbeispiel ist der elastische Grundkörper 12 des Drosselelements 10 analog zu 2 als Tellerfeder mit einer ersten Öffnung 14 ausgeführt. Im Unterschied zu Fig. 2 weist der als Tellerfeder ausgeführten Grundkörper 12 jedoch eine unabhängig vom Differenzdruck freigegebene zweite Öffnung 14.1 mit einem definierten konstanten Strömungsquerschnitt auf. Im dargestellten Ausführungsbeispiel ist die zweite Öffnung 14.1 als Bohrung in den federelastischen scheibenförmigen Grundkörper 12 eingebracht. Zusätzlich und/oder alternativ kann eine solche zweite Öffnung 14.1 auch als Vertiefung in die mindestens zwei Auflager 16.1, 16.2 eingebracht und/oder als Ringspalt ausgeführt werden. Des Weiteren kann eine solche zweite Öffnung 14.1 mit konstantem Querschnitt auch in die in Fig. 3 bis 6 gezeigten Drosselelemente 10 eingebracht werden.

Das Drosselverhalten des Drosselelements 10 kann durch Verändern des konstanten Querschnitts der zweiten Öffnung 14.1 und/oder der Steifigkeit und/oder Federkennlinie und/oder Kraft-Weg-Kennlinie des federelastischen scheibenförmigen Grundkörpers 12, 22, 32, 42 und/oder des Ansprechdrucks und/oder der Vorspannung und/oder durch Verändern einer Hubbegrenzung verändert werden.

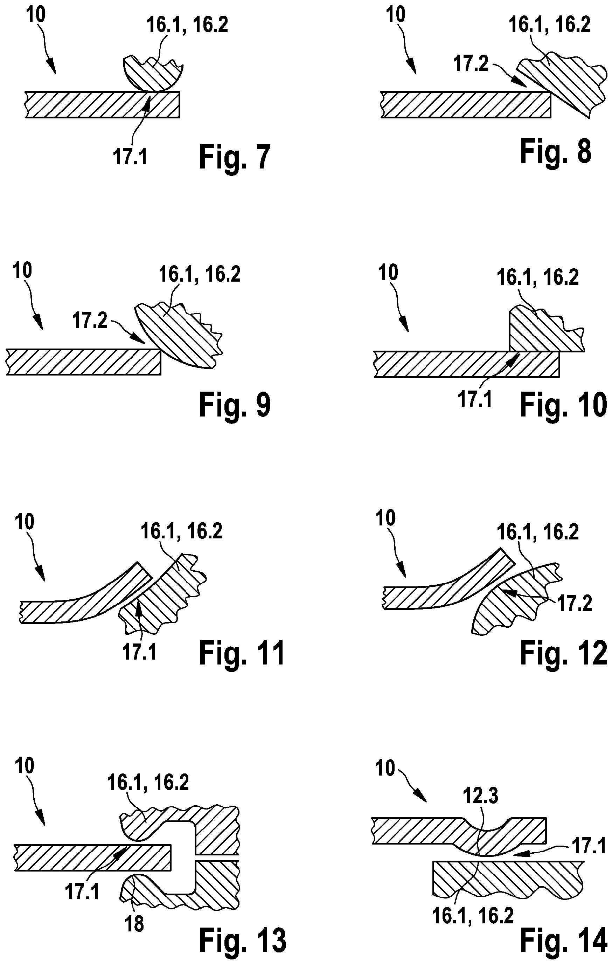

Das Drosselelement 10 liegt vorzugsweise formschlüssig an den Auflagern 16.1, 16.2 an, wodurch eine Dichtwirkung in Form einer Liniendichtung 17.2 oder einer Flächendichtung 17.1 realisiert wird. Fig. 7 bis 14 zeigen verschiedene Ausführungsbeispiele für die Auflagebereiche.

Wie aus Fig. 7 weiter ersichtlich ist, weist das Drosselelement 10 eine ebene Oberfläche auf, welche mit einer gekrümmten Fläche des Auflagers 16.1, 16.2 eine Flächendichtung 17.1 ausbildet.

Wie aus Fig. 8 weiter ersichtlich ist, weist das Drosselelement 10 eine ebene Oberfläche auf, wobei eine Kante der ebenen Fläche mit einer ebenen Fläche des Auflagers 16.1, 16.2 eine Liniendichtung 17.2 ausbildet.

Wie aus Fig. 9 weiter ersichtlich ist, weist das Drosselelement 10 eine ebene Oberfläche auf, wobei eine Kante der ebenen Fläche mit einer gekrümmten Fläche des Auflagers 16.1, 16.2 eine Liniendichtung 17.2 ausbildet.

Wie aus Fig. 10 weiter ersichtlich ist, weist das Drosselelement 10 eine ebene Oberfläche auf, welche mit der ebenen Fläche des Auflagers 16.1, 16.2 eine Flächendichtung 17.1 ausbildet.

Wie aus Fig. 11 weiter ersichtlich ist, weist das Drosselelement 10 eine gekrümmten Oberfläche auf, welche mit einer ähnlich gekrümmten Fläche des Auflagers 16.1, 16.2 eine Flächendichtung 17.1 ausbildet.

Wie aus Fig. 12 weiter ersichtlich ist, weist das Drosselelement 10 eine gekrümmten Oberfläche auf, welche mit einer entgegengesetzt gekrümmten Fläche des Auflagers 16.1, 16.2 eine Liniendichtung 17.2 ausbildet.

Wie aus Fig. 13 weiter ersichtlich ist, weist das Drosselelement 10 eine ebene Oberfläche auf, welche analog zu Fig. 10 mit einer gekrümmten Fläche des Auflagers 16.1, 16.2 eine Flächendichtung 17.1 ausbildet. Zusätzlich weist die dargestellte Drosselanordnung einen Anschlag 18 auf, welcher den Hub des Drosselelements begrenzt. Dadurch kann in vorteilhafter Weise die Lebensdauer des Drosselelements 10 gesteigert werden. Im Bereich dieses Anschlags 18 kann eine fluidische Endlagendämpfung das Öffnungs- und Geräuschverhalten optimieren.

Wie aus Fig. 14 weiter ersichtlich ist, weist das Drosselelement 10 eine Auflagenase 12.3 auf, welche auf einer ebenen Oberfläche des Auflagers 16.1, 16.2 aufliegt und eine Flächendichtung 17.1 ausbildet.

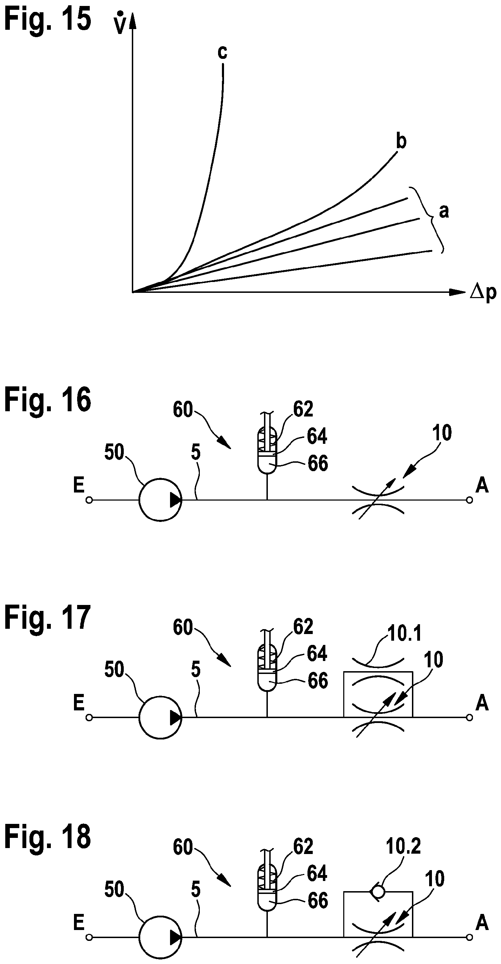

Fig. 15 zeigt ein Kennliniendiagramm mit mehreren Kennlinien von verschiedenen Anordnungen zur Drosselung einer Fluidströmung 1. In Fig. 15 zeigen Kennlinien a das dynamische Drosselverhalten von Drosselanordnungen mit einem konstantem Querschnitt. Eine Kennlinie b zeigt in Fig. 15 das dynamische Drosselverhalten einer Drosselanordnung mit einem rechteckigen Querschnitt, dessen Breite/Höhe-Verhältnis einen Wert im Bereich von 0,1 bis 1 aufweist. Eine Kennlinie c zeigt in Fig. 15 das dynamische Drosselverhalten von Ausführungsformen der vorliegenden erfindungsgemäßen Anordnung zur Drosselung einer Fluidströmung. Wie aus der Kennlinie c ersichtlich ist, zeigen Ausführungsformen der vorliegenden Erfindung ein progressives Öffnungsverhalten bzw. eine degressive Zunahme des Durchflusswiderstands mit zunehmendem Durchfluss. Dies ermöglicht in vorteilhafter Weise ein starkes Androsseln bei niedrigen Durchflüssen, sowie einen geringen Durchflusswiderstand bei größeren Durchflüssen.

Fig. 16 bis 18 zeigen jeweils ein schematisches Ersatzschaltbild eines Ausführungsbeispiels der erfindungsgemäßen Anordnung zur Drosselung einer Fluidströmung.

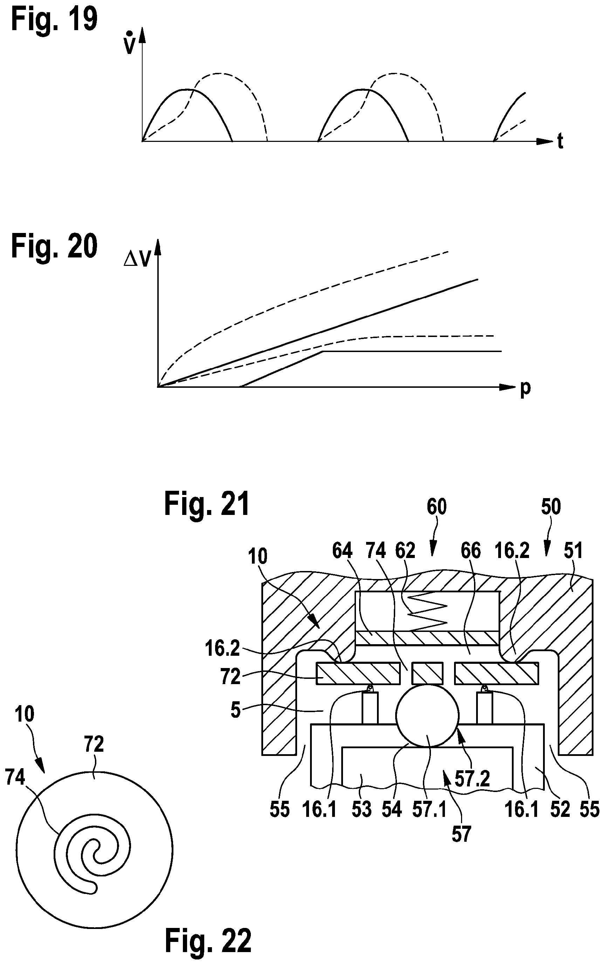

Wie aus Fig. 16 ersichtlich ist, ist zwischen einem Eingang E und einem Ausgang A eines Fluidsystems das Drosselelement 10 im dargestellten Ausführungsbeispiel in Durchflussrichtung hinter eine Volumenstromquelle 50 und ein Element 60 mit elastischem Volumen geschaltet. Die Volumenstromquelle 50 kann z.B. eine Hubkolbenpumpe, eine Zahnradpumpe, oder auch ein sonstiges Fluidelement sein, welches eine zeitliche Änderung des Volumenstroms bzw. eine Pulsation bewirkt. Fig. 19 zeigt verschiedene mögliche Verläufe von Volumenstrom-Zeit-Kennlinien der Volumenstromquelle, welche alle einen pulsförmigen Verlauf aufweisen, d.h. einen über der Zeit nicht konstanten Volumenstrom. Das Element 60 speichert das durch die Drucküberhöhung am Drosselelement 10 verfügbare Volumen entsprechend seiner Druck-Volumen-Kennlinie. Fig. 20 zeigt verschiedene Volumenänderungs-Druck-Kennlinie des Elements 60 mit variablen Volumen. Im dargestellten Ausführungsbeispiel ist das Element 60 als Kolbenspeicher mit einer Rückstellfeder 62, einem Kolben 64 und einem Ausgleichsraum 66 ausgeführt, dessen Volumen in Abhängigkeit vom Druck über den Kolben 64 und die Rückstellfeder 62 verändert werden kann. Zusätzlich oder alternativ kann das elastische Volumen beispielsweise durch die Eigenelastizität des Fluidsystems, einen Gasdruckspeicher, einen Faltenbalg, eine Membranfeder oder ähnliche Komponenten realisiert werden, welche unter Einwirken von Druck ihre Volumenaufnahme erhöhen.

Durch den variablen Drosselquerschnitt kann im Bereich kleiner Volumenströme eine stärkere Drucküberhöhung erzeugt werden und die Volumenaufnahme des Elements 60 mit elastischem Volumen erhöht werden. Dadurch ergibt sich eine geringere Restwelligkeit/Amplitudenspektrum am Ausgang A des Fluidsystems. Im Bereich großer Volumenströme werden die Verluste am Drosselelement 10 durch deren progressiven Kennlinienverlauf minimiert. Des Weiteren besteht die Möglichkeit das Drosselelement 10 parallel zu einer Konstantdrossel 10.1 oder einem Rückschlagventil 10.2 zu schalten, wie aus Fig. 17 oder 18 ersichtlich ist.

Weiterer Bestandteil der Erfindung ist die Kombination des Elements mit der Ventilfeder eines vor elastisches Volumen und Drossel geschalteten Rückschlagventils in Form einer Blattfeder. Abbildung 7 zeigt ein mögliches Design mit Blattfeder IV und Drosselelement 1 kombiniert in einem Bauteil.

Fig. 21 zeigt einen Querschnitt durch einen hinteren Bereich einer erfindungsgemäßen Kolbenpumpe 50 zur Förderung von Fluiden mit einer erfindungsgemäßen Anordnung zur Drosselung einer Fluidströmung, und Fig. 22 zeigt eine schematische Draufsicht auf ein Ausführungsbeispiel eines Drosselelements 72 für die erfindungsgemäße Anordnung zur Drosselung einer Fluidströmung aus Fig. 21.

Wie Aus Fig. 21 und 22 ersichtlich ist, umfasst die dargestellte Kolbenpumpe 50 zur Förderung von Fluiden einen nicht dargestellten Kolben, ein Zylinderelement 52 und einen zwischen einem nicht dargestellten Einlassventil und einem Auslassventil 57 angeordneten Druckraum 53, welcher von einem Deckel 51 abgeschlossen ist, wobei in der Fluidströmung nach dem Auslassventil 57 eine erfindungsgemäße Anordnung zur Drosselung einer Fluidströmung 1 vorgesehen ist. Wie aus Fig. 21 weiter ersichtlich ist, umfasst das Auslassventil 57 einen als Kugel ausgeführten Schließkörper 57.1 und einen Auslassventilsitz 57.2 und stellt die Fluidströmung 1 zwischen einer Auslassöffnung 54 des Druckraums 53 und mindestens einer Abströmöffnung 55 der Kolbenpumpe 50 ein. Das Drosselelement 10 umfasst einen scheibenförmigen Grundkörper 72, welcher zwischen zwei umlaufenden Auflagern 16.1, 16.2 angeordnet ist. Der scheibenförmige Grundkörper 72 ist als Blattfeder mit einer spiralförmigen ersten Öffnung 74 ausgeführt und wirkt gleichzeitig als Rückstellelement für den Schließkörpers 57.1.

Zudem ist im Bereich des Deckels 51 der Kolbenpumpe ein Element 60 mit variablem Volumen ausgebildet, welches einen durch eine Rückstellfeder 62 gestützten Kolben 64 aufweist, welcher das Volumen des Ausgleichsraums 66 verändert.

Ausführungsformen der vorliegenden Erfindung ermöglichen in vorteilhafter Weise eine Reduktion von Pulsationen in Fluidsystemen durch einen variablen Drosselquerschnitt. Die Realisierung einer solchen Drosselanordnung mit variablem Strömungsquerschnitt erfolgt in vorteilhafter Weise mit einfachsten, kostengünstigen, prozesssicher montierbaren, werkzeugfallenden Bauteilen und einem robustem Design, welches unempfindlicher gegenüber Bauteil- und Zusammenbautoleranzen ist, als bisher bekannte variable Drosseln.

## Patentansprüche

1. Anordnung zur Drosselung einer Fluidströmung mit einem Drosselelement (10), welches zur Beeinflussung eines Strömungsquerschnitts in einem Fluidkanal (5) angeordnet ist, in dem sich eine Volumenstromquelle (50), welche eine zeitliche Änderung des Volumenstroms bewirkt und ein elastisches Volumen (60) befinden und
wobei das Drosselelement (10) einen federelastischen scheibenförmigen Grundkörper (12, 22, 32, 42, 72) aufweist, welcher mit seiner Oberseite (12.1) und Unterseite (12.2) so zwischen mindestens zwei Auflagern (16.1, 16.2) im Fluidkanal (5) angeordnet ist, dass der Strömungsquerschnitt in Abhängigkeit von der Druckdifferenz zwischen Oberseite (12.1) und Unterseite (12.2) des federelastischen scheibenförmigen Grundkörpers (12, 22, 32, 42, 72) variabel einstellbar ist, wobei mindestens ein Auflager (16.1, 16.2) an der Oberseite (12.1) des federelastischen scheibenförmigen Grundkörpers (12, 22, 32, 42, 72) und mindestens ein Auflager (16.1, 16.2) an der Unterseite (12.2) des federelastischen scheibenförmigen Grundkörpers (12, 22, 32, 42, 72) anliegt,
**dadurch gekennzeichnet,**
**dass** die Anordnung zur Drosselung einer Fluidströmung in Durchflussrichtung hinter die Volumenstromquelle (50), welche eine zeitliche Änderung des Volumenstroms bewirkt und hinter das elastische Volumen (60) geschaltet ist.

2. Anordnung nach Anspruch 1, **dadurch gekennzeichnet, dass** der federelastische scheibenförmige Grundkörper (12, 22, 32, 42, 72) eine durchströmbare erste Öffnung (14, 24, 34, 44, 74) aufweist, wobei bei einer abgehobenen Seite (12.1, 12.2) des federelastischen scheibenförmigen Grundkörpers (12, 22, 32, 42, 72) entweder die erste Öffnung (14, 24, 34, 44, 74) des federelastischen scheibenförmigen Grundkörpers (12, 22, 32, 42, 72) durchströmt oder der federelastische scheibenförmige Grundkörper (12, 22, 32, 42, 72) umströmt ist.

3. Anordnung nach Anspruch 1 oder 2, **dadurch gekennzeichnet, dass** eine unabhängig vom Differenzdruck freigegebene zweite Öffnung (14.1) mit einem definierten konstanten Strömungsquerschnitt vorhanden ist, wobei die zweite Öffnung (14.1) in den federelastischen scheibenförmigen Grundkörper (12, 22, 32, 42, 72) und/oder als Vertiefung in die mindestens zwei Auflager (16.1, 16.2) eingebracht und/oder als Ringspalt ausgeführt ist.

4. Anordnung nach einem der Ansprüche 1 bis 3, **dadurch gekennzeichnet, dass** der federelastische scheibenförmige Grundkörper (12, 22, 32, 42, 72) unter einer definierten Vorspannung zwischen den mindestens zwei Auflagern (16.1, 16.2) angeordnet ist, so dass ein Öffnungsdifferenzdruck vorgegeben ist, wobei die mindesten zwei Auflager (16.1, 16.2) mit einem vorgebbaren Abstand (dr1) zueinander angeordnet sind.

5. Anordnung nach einem der Ansprüche 1 bis 4, **dadurch gekennzeichnet, dass** die Druckdifferenz den federelastischen scheibenförmigen Grundkörper (12, 22, 32, 42, 72) von dem mindestens einen Auflager (16.1, 16.2) der Seite (12.1, 12.2) mit dem höheren Druck (P1, P2) abhebt, so dass der federelastische scheibenförmige Grundkörper (12, 22, 32, 42, 72) einen Hub (ds1, ds2) ausführt und den Strömungsquerschnitt vergrößert.

6. Anordnung nach einem der Ansprüche 1 bis 5, **dadurch gekennzeichnet, dass** der federelastische scheibenförmige Grundkörper (12, 22, 32, 42, 72) unter Ausbildung einer Flächendichtung (17.1) und/oder Liniendichtung (17.2) formschlüssig an den mindestens zwei Auflagern (16.1, 16.2) anliegt.

7. Anordnung nach einem der Ansprüche 1 bis 6, **dadurch gekennzeichnet, dass** das Drosselverhalten des Drosselelements (10) durch Verändern des konstanten Querschnitts der zweiten Öffnung (14.1) und/oder der Steifigkeit und/oder Federkennlinie und/oder Kraft-Weg-Kennlinie des federelastischen scheibenförmigen Grundkörpers (12, 22, 32, 42, 72) und/oder des Ansprechdrucks und/oder der Vorspannung und/oder durch Verändern einer Hubbegrenzung veränderbar ist.

8. Anordnung nach einem der Ansprüche 1 bis 7, **gekennzeichnet durch** ein Element (60) mit einem druckabhängigen veränderbaren Volumen (ΔV) und/oder eine Drosselvorrichtung (10.1) mit konstantem Querschnitt und/oder ein Rückschlagventil (10.2), welche strömungstechnisch in einer Reihen- und/oder Parallelschaltung zum Drosselelement (10) angeordnet sind.

9. Anordnung nach einem der Ansprüche 1 bis 8, **dadurch gekennzeichnet, dass** der federelastische scheibenförmige Grundkörper (72) als Rückstellfeder für ein Schließelement (57.1) eines Ventils (57) ausgeführt ist.

10. Kolbenpumpe zur Förderung von Fluiden, welche einen Kolben, ein Zylinderelement (52) und einen zwischen einem Einlassventil und einem Auslassventil (57) angeordneten Druckraum (53) umfasst, welcher von einem Deckel (51) abgeschlossen ist, wobei in der Fluidströmung (1) nach dem Auslassventil (57) Mittel (10) zum Drosseln der Fluidströmung (1) vorgesehen sind, **dadurch gekennzeichnet, dass** die Drosselmittel als Anordnung zur Drosselung einer Fluidströmung (1) nach einem der Ansprüche 1 bis 9 ausgeführt sind.

## Claims

1. Arrangement for throttling a fluid flow, comprising a throttle element (10), which is arranged so as to influence a flow cross section in a fluid duct (5) in which a volume flow source (50), which causes the volume flow rate to change over time, and an elastic volume (60) are situated, and
wherein the throttle element (10) has a resilient disk-shaped main body (12, 22, 32, 42, 72), which is arranged via its upper side (12.1) and underside (12.2) between at least two supports (16.1, 16.2) in the fluid duct (5), such that the flow cross section can be variably adjusted according to the pressure difference between the upper side (12.1) and underside (12.2) of the resilient disk-shaped main body (12, 22, 32, 42, 72), at least one support (16.1, 16.2) bearing against the upper side (12.1) of the resilient disk-shaped main body (12, 22, 32, 42, 72) and at least one support (16.1, 16.2) bearing against the underside (12.2) of the resilient disk-shaped main body (12, 22, 32, 42, 72),
**characterized**
**in that** the arrangement for throttling a fluid flow is, in a direction of flow, arranged downstream of the volume flow source (50), which causes the volume flow rate to change over time, and downstream of the elastic volume (60).

2. Arrangement according to Claim 1, **characterized in that** the resilient disk-shaped main body (12, 22, 32, 42, 72) has a first opening (14, 24, 34, 44, 74) through which fluid can flow, fluid flowing either through the first opening (14, 24, 34, 44, 74) in the resilient disk-shaped main body (12, 22, 32, 42, 72) or around the resilient disk-shaped main body (12, 22, 32, 42, 72) when one side (12.1, 12.2) of the resilient disk-shaped main body (12, 22, 32, 42, 72) is raised.

3. Arrangement according to Claim 1 or 2, **characterized in that** a second opening (14.1) that has a defined constant flow cross section and is released independently of the differential pressure is provided, the second opening (14.1) being introduced into the resilient disk-shaped main body (12, 22, 32, 42, 72) and/or being introduced in the form of a recess into the at least two supports (16.1, 16.2) and/or being formed as an annular gap.

4. Arrangement according to one of Claims 1 to 3, **characterized in that** the resilient disk-shaped main body (12, 22, 32, 42, 72) is arranged under a defined bias between the at least two supports (16.1, 16.2) such that an opening differential pressure is predefined, the at least two supports (16.1, 16.2) being arranged at a predefinable distance (dr1) from one another.

5. Arrangement according to one of Claims 1 to 4, **characterized in that** the pressure difference lifts the resilient disk-shaped main body (12, 22, 32, 42, 72) from the at least one support (16.1, 16.2) on the side (12.1, 12.2) of greater pressure (P1, P2), such that the resilient disk-shaped main body (12, 22, 32, 42, 72) carries out a stroke motion (ds1, ds2) and increases the flow cross section.

6. Arrangement according to one of Claims 1 to 5, **characterized in that** the resilient disk-shaped main body (12, 22, 32, 42, 72) bears against the at least two supports (16.1, 16.2) in an interlocking manner and forms a surface seal (17.1) and/or a line seal (17.2).

7. Arrangement according to one of Claims 1 to 6, **characterized in that** the throttle behavior of the throttle element (10) can be changed by changing the constant cross section of the second opening (14.1) and/or the rigidity and/or spring characteristic curve and/or load-displacement characteristic curve of the resilient disk-shaped main body (12, 22, 32, 42, 72) and/or the response pressure and/or the bias, and/or by changing a stroke delimitation.

8. Arrangement according to one of Claims 1 to 7, **characterized by** an element (60) with a volume (ΔV) that can be changed according to pressure and/or a throttle device (10.1) of constant cross section and/or a check valve (10.2), which are arranged so as to be fluidically connected in series and/or in parallel to the throttle element (10).

9. Arrangement according to one of Claims 1 to 8, **characterized in that** the resilient disk-shaped main body (72) is formed as a return spring for a closing element (57.1) of a valve (57).

10. Piston pump for delivering fluids, which comprises a piston, a cylinder element (52) and a pressure chamber (53), which is arranged between an inlet valve and an outlet valve (57) and is closed by a lid (51), means (10) for throttling the fluid flow (1) being provided after the outlet valve (57) in the direction of fluid flow (1), **characterized in that** the throttle means are formed as an arrangement for throttling a fluid flow (1) according to one of Claims 1 to 9.

## Revendications

1. Agencement pour l'étranglement d'un écoulement de fluide avec un élément d'étranglement (10) qui, pour influencer une section transversale d'écoulement de fluide, est disposé dans un canal de fluide (5) dans lequel se trouvent une source de débit volumique (50) qui provoque une variation temporelle du débit volumique, et un volume élastique (60), et
dans lequel l'élément d'étranglement (10) présente un corps de base (12, 22, 32, 42, 72) en forme de disque élastique à ressort qui est disposé avec son côté supérieur (12.1) et son côté inférieur (12.2) entre au moins deux supports (16.1, 16.2) dans le canal de fluide (5), de telle sorte que la section transversale d'écoulement puisse être ajustée de manière variable en fonction de la différence de pression entre le côté supérieur (12.1) et le côté inférieur (12.2) du corps de base en forme de disque élastique à ressort (12, 22, 32, 42, 72), au moins un appui (16.1, 16.2) s'appliquant contre le côté supérieur (12.1) du corps de base en forme de disque élastique à ressort (12, 22, 32, 42, 72) et au moins un appui (16.1, 16.2) s'appliquant contre le côté inférieur (12.2) du corps de base en forme de disque élastique à ressort (12, 22, 32, 42, 72),
**caractérisé en ce que**
l'agencement pour l'étranglement d'un écoulement de fluide est monté dans le sens du passage d'écoulement derrière la source de débit volumique (50) qui provoque une variation temporelle du débit volumique, et derrière le volume élastique (60) .

2. Agencement selon la revendication 1, **caractérisé en ce que** le corps de base en forme de disque élastique à ressort (12, 22, 32, 42, 72) présente une première ouverture (14, 24, 34, 44, 74) pouvant être parcourue par l'écoulement, la première ouverture (14, 24, 34, 44, 74) du corps de base en forme de disque élastique à ressort (12, 22, 32, 42, 72) étant traversée par l'écoulement ou bien le corps de base en forme de disque élastique à ressort (12, 22, 32, 42, 72) étant contourné par l'écoulement, lorsqu'un côté (12.1, 12.2) du corps de base en forme de disque élastique à ressort (12, 22, 32, 42, 72) est soulevé.

3. Agencement selon la revendication 1 ou 2, **caractérisé en ce qu'**une deuxième ouverture (14.1) ouverte indépendamment de la pression différentielle est pourvue d'une section transversale d'écoulement définie constante, la deuxième ouverture (14.1) étant réalisée dans le corps de base en forme de disque élastique à ressort (12, 22, 32, 42, 72) et/ou étant réalisée sous forme de renfoncement dans les au moins deux appuis (16.1, 16.2) et/ou étant réalisée sous forme de fente annulaire.

4. Agencement selon l'une quelconque des revendications 1 à 3, **caractérisé en ce que** le corps de base en forme de disque élastique à ressort (12, 22, 32, 42, 72) est disposé avec une précontrainte définie entre les au moins deux appuis (16.1, 16.2), de telle sorte qu'une pression différentielle d'ouverture soit prédéfinie, les au moins deux appuis (16.1, 16.2) étant disposés l'un par rapport à l'autre à une distance prédéfinissable (dr1).

5. Agencement selon l'une quelconque des revendications 1 à 4, **caractérisé en ce que** la différence de pression soulève le corps de base en forme de disque élastique à ressort (12, 22, 32, 42, 72) de l'au moins un appui (16.1, 16.2) du côté (12.1, 12.2) ayant la pression la plus élevée (P1, P2), de telle sorte que le corps de base en forme de disque élastique à ressort (12, 22, 32, 42, 72) effectue une course (ds1, ds2) et augmente la section transversale d'écoulement.

6. Agencement selon l'une quelconque des revendications 1 à 5, **caractérisé en ce que** le corps de base en forme de disque élastique à ressort (12, 22, 32, 42, 72) s'applique par engagement par correspondance de formes contre les au moins deux appuis (16.1, 16.2) en constituant un joint d'étanchéité de surface (17.1) et/ou un joint d'étanchéité linéaire (17.2).

7. Agencement selon l'une quelconque des revendications 1 à 6, **caractérisé en ce que** le comportement d'étranglement de l'élément d'étranglement (10) peut être modifié en variant la section transversale constante de la deuxième ouverture (14.1) et/ou la rigidité et/ou la caractéristique de ressort et/ou la caractéristique force-distance du corps de base en forme de disque élastique à ressort (12, 22, 32, 42, 72) et/ou la pression de réaction et/ou la précontrainte et/ou en variant une limitation de course.

8. Agencement selon l'une quelconque des revendications 1 à 7, **caractérisé par** un élément (60) avec un volume (ΔV) variable en fonction de la pression et/ou par un dispositif d'étranglement (10.1) de section transversale constante et/ou par un clapet antiretour (10.2), qui sont disposés par une technique d'écoulement de manière montée en série et/ou en parallèle par rapport à l'élément d'étranglement (10).

9. Agencement selon l'une quelconque des revendications 1 à 8, **caractérisé en ce que** le corps de base en forme de disque élastique à ressort (72) est réalisé sous forme de ressort de rappel pour un élément de fermeture (57.1) d'une soupape (57).

10. Pompe à piston pour refouler des fluides, qui comprend un piston, un élément de cylindre (52) et un espace de pression (53) disposé entre une soupape d'admission et une soupape d'échappement (57), lequel espace de pression est fermé par un couvercle (51), des moyens (10) pour réaliser l'étranglement de l'écoulement de fluide (1) étant prévus dans l'écoulement de fluide (1) après la soupape d'échappement (57), **caractérisée en ce que** les moyens d'étranglement sont réalisés sous forme d'agencement pour l'étranglement d'un écoulement de fluide (1) selon l'une quelconque des revendications 1 à 9.
